Europäisches Patentamt

European Patent Office

Office européen des brevets

(11) Publication number: 0 403 044
A2

# (12) EUROPEAN PATENT APPLICATION

(21) Application number: 90300041.2

(22) Date of filing: 03.01.90

(51) Int. Cl.⁵: C08G 18/80, C08G 18/42,
C08G 18/48, C08G 18/62

(30) Priority: 16.06.89 GB 8913859

(43) Date of publication of application:
19.12.90 Bulletin 90/51

(84) Designated Contracting States:
AT BE CH DE DK ES FR GB GR IT LI LU NL SE

(71) Applicant: HUNTER DOUGLAS INDUSTRIES
B.V.
Piekstraat 2
NL-3071 EL Rotterdam(NL)

(72) Inventor: De Jong, Hendrikus
Kilstraat 44
NL-3299 XB Maasdam(NL)

(74) Representative: Collier, Jeremy Austin Grey et
al
J.A.Kemp & Co. 14, South Square Gray's Inn
London WC1R 5EU(GB)

(54) Blocked isocyanates and their production and use.

(57) Blocked polyisocyanates made with a plurality of blocking agents having substantially different deblocking agents have the advantage that they can be used without the parent polyisocyanate ever being released. More particularly, polyurethanes are made by reacting such blocked polyisocyanates with a suitable polyol first at a temperature such that one of the isocyanate groups becomes deblocked, and then at a higher temperature such that the remaining isocyanate groups are deblocked.

EP 0 403 044 A2

## BLOCKED ISOCYANATES AND THEIR PRODUCTION AND USE

This invention relates to blocked isocyanates, and to their production and use, especially in the production of surface coatings.

Isocyanates, and particularly polyisocyanates (i.e. compounds or mixtures of compounds containing on average two or more isocyanate groups per molecule), are widely used in the production of polyurethanes which are used for making synthetic foams, elastomers, and surface coatings. For this purpose a polyisocyanate is reacted with a polyol to produce the polyurethane. Because isocyanates are toxic and, in many cases, volatile, they are often used, especially in applications involving heating, in the form of so-called "blocked isocyanates" in which the isocyanate radicals are masked, and their adverse effects thus prevented, by reaction with a so-called "blocking agent" of which a wide variety are known. Such blocking agents remain effective so long as the deblocking temperature is not exceeded. When the blocked isocyanate is heated, the blocking agent is removed and the isocyanate group is liberated so that it can then react with the polyol or other reagent to form the polyurethane. As soon as the isocyanate is deblocked, formation of the polyurethane begins, cross-linking starts and any still remaining solvents or other reagents present may be entrapped in the polyurethane. This is especially a problem in coil coating in which, in order to obtain good flow of the composition, relatively non-volatile solvents must be used.

While the use of blocking agents solves some of the problems associated with the use of isocyanates, especially their toxicity and sensitivity to moisture at ambient temperature, their use is accompanied by certain inherent disadvantages. More particularly, when the blocked isocyanate is heated, as is generally necessary, for example in processes for forming a polyurethane coating in situ on a surface, the blocking agent is removed and the isocyanate group is thereby rapidly liberated once the so-called deblocking temperature is reached. This means that at the deblocking temperature the toxic monomeric isocyanate is liberated and can escape into the surrounding atmosphere, and/or cause unwanted side reactions. Consequently the user must be protected against the toxic effects of the polyisocyanate, and there is usually some loss of polyisocyanate by evaporation so that more isocyanate is required than should be necessary. For example, it is common practice to use an excess of up to 20% of polyisocyanate over that theoretically required. These disadvantages can be avoided to some extent by using blocked prepolymers but this causes higher costs and a lower solids content of the composition. Moreover the polyurethane composition obtained is less flexible.

The present invention provides a solution to these problems in the form of a novel type of blocked polyisocyanate which also has other practical advantages in use.

The present invention provides blocked polyisocyanates in which each polyisocyanate molecule is blocked with at least two blocking agents, at least two of which have substantially different deblocking temperatures. Such blocked polyisocyanates may be made by reacting a polyisocyanate with a first blocking agent under conditions such that at least one but not all of the polyisocyanate groups of the said polyisocyanate are blocked by the said blocking agent, and then with a second blocking agent, having a substantially different deblocking temperature, and optionally further blocking agents, under conditions such that the remaining isocyanate groups of the polyisocyanate become blocked.

The invention thus provides a process for the manufacture of a blocked polyisocyanate which comprises the steps of:
- reacting a polyisocyanate with a first blocking agent under conditions and over a period such that, in at least a part of the polyisocyanate molecules, at least one of the isocyanate groups is blocked by said first blocking agent and at least one isocyanate group remains unblocked,
- subsequently reacting said partly blocked polyisocyanate with a second blocking agent having a deblocking temperature substantially different from that of said first blocking agent, and optionally
- reacting said polyisocyanate with one or more further blocking agents, which or each of which can have a deblocking temperature substantially different from the first and/or second blocking agent.

In almost every polyisocyanate the isocyanate groups show different reactivity. For example in isophorone diisocyanate the reactivities of the isocyanate groups differ by a factor of about 10. Even in those cases where the isocyanate groups have approximately the same reactivity, the initial reaction of one with a blocking agent will strongly reduce the reactivity of the other (or others). Thus in practice there is no difficulty in making a blocked polyisocyanate in which in each molecule the isocyanate groups are blocked by at least two blocking agents.

By using two different blocking agents with widely different deblocking temperatures, the blocked isocyanate may be used, for example to manufacture a polyurethane, under conditions such that first one blocked polyisocyanate group is liberated and thus becomes available to react with the required reagent, e.g. a polyol, and then the temperature is raised thus liberating the second (and any further) isocyanate group of the polyisocyanate so that it (or they) become available to react further with the reagent(s) used to make the required polyurethane. By carrying out the reaction in this manner in two stages, the possibility of free polyisocyanate being liberated is minimized. Because a prepolymerizate is formed in the first stage, the chance of the polyisocyanate evaporating from the reaction mixture is also minimized, and loss of active material and potential toxic effects are thereby avoided.

Moreover, it has been found that the blocked polyisocyanates of the present invention possess other significant advantages. More particularly, as compared with blocked isocyanates made using only a single blocking agent, they have substantially lower viscosities and thus facilitate the production of compositions of high solids content (i.e. less solvent or no solvent is required). For example Desmodur-W blocked with caprolactam is almost solid at $60°C$ and Desmodur-W blocked with n-butanol is crystalline at ambient temperature. However, Desmodur-W blocked at one end with caprolactam and at the other with n-butanol has a much lower viscosity and gives a usable solution at ambient temperature at 75% solids content in n-butyl acetate. The two stage reaction required with the new blocked polyisocyanates is less liable to cause unwanted side reactions during production of the polyurethane, and in consequence the polyurethane often shows less yellowing than when made with previously used blocked polyisocyanates.

According to the invention there are used at least a first and a second blocking agent, having as used (either by themselves or as combinations of blocking agent and catalyst) substantially different deblocking temperatures.

The blocking process may be varied to produce at least two different types of blocked polyisocyanates, which if used in a process for manufacturing polyurethanes, result in polyurethanes with different characteristics, making each such polyurethanes suitable for a specific purpose different from that of the other.

In one variation a blocked polyisocyanate is produced in which the first blocking step is performed with the first blocking agent having a lower deblocking temperature than any of the other blocking agents used in the blocking of said polyisocyanate.

In a second variation the first blocking step is performed with the first blocking agent having a higher deblocking temperature than the second blocking agent.

The first variation is the safer of the two as the prepolymerizate is quickly formed with little or no chance of small volumes of polyisocyanate escaping, but with fast curing, the reaction time available to the less reactive isocyanate groups can be too short for them to react during the curing step, and full curing is not completed during this step which results in a relative long aging period after curing. This makes for good intercoat adhesion and consequently this variation is very suitable for producing, e.g., basic coatings and/or adhesives.

The second variation involves a slight risk of a little isocyanate escaping and the advantage of fast cross-linking and quick hardening when the second blocking agent deblocks. This leads to high hardness and optimal solvent resistance immediately after the curing step. This variation is consequently very suitable for producing, e.g., polyurethane paints that are to form the outer layer of the coating, e.g. top coats, and especially clear topcoats in a coilcoating process.

The differences in behaviour in the curing process and in the final product-characteristics are due to the fact that the first blocking agent in the first step will block the most-reactive of the isocyanate groups of each polyisocyanate molecule.

The present invention can be used with any polyisocyanate, and especially those which are available commercially, for example aliphatic polyisocyanates, e.g. alkylene diisocyanates having 6 to 10 carbon atoms in the alkylene group, such as hexamethylene diisocyanate or trimethyl hexamethylene diisocyanate; cycloaliphatic diisocyanates containing one or more aliphatic rings, such as dicyclohexylmethane diisocyanate and isophorone diisocyanate; and aromatic polyisocyanates such as 2,4- and 2,6-tolylene diisocyanates and 4,4'-diphenylmethane diisocyanate. As is well known, for applications where resistance to yellowing is important, e.g. in the production of surface coatings, use of aliphatic or cycloaliphatic diisocyanates is preferred.

The blocking agents used in the present invention can be selected from known blocking agents having regard only to the requirement that the blocking agents used shall have widely different deblocking temperatures, i.e. temperatures at which the blocked isocyanate regenerates free isocyanate groups. Deblocking temperatures should preferably be at least about $40°C$ apart depending on the curing conditions. The actual deblocking temperature in any particular case depends upon the nature of the polyisocyanate, the nature of the blocking agent, and the conditions under which deblocking takes place, more especially the presence or absence of a catalyst to reduce the deblocking temperature and the type of catalyst used and its amount.

Suitable blocking agents for use in the present invention include diethyl malonate, acetylacetone and methylethylketoxime, which typically deblock at about 140° C in the absence of a catalyst and about 110° C in the presence of a catalyst; acetoneoxime, caprolactam, and alkylmercaptans, which deblock at about 160-180° C in the absence of a catalyst; and alcohols and pyrrolidone which deblock at 180° C to 250° C (primary alcohols having higher deblocking temperatures than tertiary alcohols). By way of example, when the polyisocyanate is 4,4'-dicyclohexylmethane diisocyanate (commercially available as Desmodur W), a preferred combination of blocking agents is caprolactam which has a deblocking temperature of about 130° C in the presence of a catalyst, and n-butanol which has a deblocking temperature of about 190° C in the presence of the same catalyst.

According to a feature of the invention, the novel blocked polyisocyanates are used for the manufacture of polyurethanes in a process which comprises reacting a polyol with a blocked polyisocyanate of the invention first at a temperature which at least one but less than all of the blocked isocyanate groups of the blocked polyisocyanate is (or are) deblocked and reacts with at least one, but less than all, of the hydroxyl groups of the polyol to form an intermediate urethane, and then the reaction temperature is raised so that the remaining blocked isocyanate groups of the blocked polyisocyanate are deblocked and can react with the hydroxyl groups of the intermediate urethane.

The invention thus provides a process for the manufacture of a polyurethane which comprises reacting a polyol with a blocked polyisocyanate of the invention at a temperature equal to or above the deblocking temperature of the blocking agent having, in the presence of a catalyst if such is present, the lowest deblocking temperature, but below the deblocking temperature of the blocking agent(s) having a higher deblocking temperature, for a sufficient period of time to allow said deblocking to be completed or substantially completed; and then reacting the intermediate product so produced with the still partly blocked polyisocyanate at a temperature equal to or above the deblocking temperature of the blocking agent(s) having a higher deblocking temperature, for a period of time to allow the last mentioned blocking agent(s) to be deblocked, after which cross-linking will begin.

The polyol used in the manufacture of the polyurethane may be any polyol already proposed for such use, for example a hydroxy-terminated polyester (such as the products sold under the Trade Marks LH 818 of Dynamit Nobel and Desmophen 670 and Alkynol 2624 of Bayer), a hydroxy-terminated polyether, or an acrylic resin having terminal hydroxy groups (such as the products sold under the Trade Marks KL5-2573 of Bayer and Degelan LS135/279 of Degussa), a polyalkylene glycol e.g. polyethylene glycol, or polypropylene glycol, or a hydroxy-terminated polyacetate. Reactive diluents (e.g. those containing 2 or more hydroxyl groups per molecule) can also be used to increase total solids content of the composition.

It will be noted that in the process of the invention for making polyurethanes, the blocked polyisocyanate is practically never converted into free polyisocyanate. Problems associated with evaporation of the latter are thereby avoided. The intermediate urethane has a significantly higher molecular weight than the completely deblocked polyisocyanate, and is consequently of low volatility at the reaction temperature.

The invention is very useful in the production of surface polyurethane coatings (paints), and especially in coil-coating processes. For this purpose, the polyurethane-forming composition, which contains the blocked polyisocyanate and the polyol and may in addition contain pigments and, if necessary, solvents, is applied to the surface to be coated and then progressively heated. At a relatively low temperature, e.g. about 130° C in the case already mentioned where the polyisocyanate is dicyclohexylmethane diisocyanate and the first blocking agent is caprolactam, half of the isocyanate groups are deblocked and react with the hydroxyl groups of the polyol. No evaporation of the polyisocyanate occurs and the intermediate urethane product is not cross-linked. The temperature is then raised, e.g. to about 190 to 200° C in the case already mentioned, and at this temperature the remaining isocyanate groups are deblocked and can react with the hydroxyl groups of the intermediate urethane. At the final reaction temperature, e.g. about 235° C, the coating is cooled. The whole process, when operated continuously, may take in the region of 20 to 30 seconds. In the final coating, part of the isocyanate groups may remain unreacted, that part depending on the nature of the catalyst used. In the case of undercoatings or adhesive layers it can be advantageous to have a residue of unreacted isocyanate groups as their presence can favour inter layer adhesion and adhesion to substrates. The proportion of unreacted isocyanate groups can be controlled by selection of the appropriate blocking agents and catalyst. The residual isocyanate groups eventually react with residual hydroxyl groups in the coating upon aging of the latter. Such aging usually takes up to about seven days. Since the period between manufacture and use of such coatings is normally more than seven days, this after reaction normally causes no problem.

The following Examples illustrate the invention.

4

## EXAMPLE 1 —

Desmodur W (4,4'-dicyclohexylmethane diisocyanate, (00g), was mixed with caprolactam (deblocking temperature 155° C, 43.2g) and the mixture was held at 60° C for about six hours. This completes blocking of one isocyanate group of the initial diisocyanate. n-Butanol (deblocking temperature 200° C, 30g, 2% excess) was then added and heating of the mixture was then continued for a further six hours at 60° C. This completes blocking of the diisocyanate. Propylene glycol monomethylether acetate (57.5g) was then added and a 75% solution of the blocked diisocyanate was obtained. This solution has a viscosity of 400 cPs and an isocyanate content of 14.4% NCO. The product has excellent solubility in the usual solvents used in polyurethane production, and good miscibility with conventional polyols. It may be used in the manner already described.

## EXAMPLE 2 —

A clear paint A was made with the following composition:

| | |
|---|---|
| Desmophen 670 (trademark of Bayer) (75% in ethylglycolacetate) | 100 g |
| Blocked polyisocyanate BL3175 (Bayer) (blocked with butanonoxime as (sole) blocking agent and based on HDI) deblocking temperature with catalyst 130° C | 70 g |
| Catalyst (dibutyl tin dilaurate) | 0.2 g |
| Propylene glycol monomethyletheracetate | 8 g |
| Surfynol E (trade mark of Air Products) (surface active agent) | 0.2 g |

A clear paint B was made with the same composition except that the blocked polyisocyanate was replaced by 54.9 g of a blocked isocyanate according to the invention as described in Example 1. In the presence of the catalyst the deblocking temperatures of the two blocking agents used were 145° C and 190° C respectively. In both cases the NCO-OH ratio was 1.0.

Paints A and B were used in two ways: (i) "slow" curing at a relatively low temperature to show the behaviour of the blocking agents and some characteristics of the paint produced, and (ii) fast curing at different high temperatures to show the same under coil coating circumstances.

The results obtained were as follows:
In the following Table:
"S-Resist" = Solvent resistance, acetone-double rubs
"Hardness" = Pencil hardness
+ = Complete deblocking at 130° C
* = Deblocking 1st blocking agent at 145° C
** = Deblocking 2nd blocking agent at 190° C, and crosslinking starts and progresses

5

| "Slow" Curing | Paint A | Paint B |
|---|---|---|
| + 10 min. 120° C | Sticky, no crosslinking | Sticky, no deblocking |
| + 10 min. 130° C | Hardness 2II S-Resist > 50 | Sticky, no deblocking |
| + 10 min. 140° C | Hardness 2H S-Resist > 50 | Not sticky anymore, no deblocking |
| + 10 min. 150° C | Hardness 2H S-Resist > 50 | * Hardness F S-Resist 5 hardly any crosslinking |
| + 10 min. 160° C | Hardness H S-Resist > 50 | * Hardness F S-Resist 10 hardly any crosslinking |
| + 10 min. 175° C | Hardness H S-Resist > 50 | * Hardness F S-Resist 15 hardly any crosslinking |
| + 10 min. 190° C | Hardness F/H S-Resist > 50 | * Hardness 2H ** S-Resist > 50 |
| "Fast" Curing (curing 24 secs.) | Paint A | Paint B |
| P.M.T. 225° C (Peak metal temp) | S-Resist > 50 Hardness II | S-Resist 5 Hardness HB |
| P.M.T. 235° C | S-Resist > 50 Hardness H | S-Resist 40 Hardness H |
| P.M.T. 245° C | S-Resist > 50 Hardness H | S-Resist > 50 Hardness 2H |
| After 1 week aging (25° C) | S-Resist > 50 Hardness H | S-Resist > 50 Hardness 4H |
| For A and B after the "fast" curing the flexibility of the clear paint is 0 (zero) T, and also after aging. | | |

## Claims

1. A blocked polyisocyanate in which each polyisocyanate molecule is blocked with at least two blocking agents, at least two of which have substantially different deblocking temperatures.

2. A blocked polyisocyanate according to claim 1 derived from an alkylene polyisocyanate of 6 to 10 carbon atoms in the alkylene group, a cycloaliphatic polyisocyanate containing one or more aliphatic rings, or an aromatic polyisocyanate.

3. A blocked polyisocyanate according to claim 1 derived from hexamethylene diisocyanate, trimethyl hexamethylene diisocyanate, dicyclohexylmethane diisocyanate, isophorone diisocyanate, 2,4- or 2,6-tolylene diisocyanate, or 4,4'-diphenylmethane diisocyanate, or a derivative thereof with higher functionality.

4. A blocked polyisocyanate according to any one of claims 1 to 3 in which the blocking agents have deblocking temperatures at least 40° C apart.

5. A blocked polyisocyanate according to claim 4 in which the blocking agents are two or more of diethyl malonate, acetylacetone, methylethylketoxime, acetoneoxime, butanone oxime, caprolactam, an alkyl mercaptan, propanol or butanol.

6. Process for the production of a blocked polyisocyanate as claimed in any one of the preceding claims which comprises the steps of:
- reacting a polyisocyanate with a first blocking agent under conditions and over a period such that, in at

6

least a part of the polyisocyanate molecules, at least one of the isocyanate groups is blocked by said first blocking agent and at least one isocyanate group remains unblocked,
- subsequently reacting said partly blocked polyisocyanate with a second blocking agent having a deblocking temperature substantially different from that of said first blocking agent, and optionally
- reacting said polyisocyanate with one or more further blocking agents, which or each of which can have a deblocking temperature substantially different from the first and/or second blocking agent.

7. A process according to claim 6 wherein, in substantially all of the polyisocyanate molecules, at least one of the isocyanate groups is blocked by the first blocking agent and at least one isocyanate group remains unblocked.

8. A process according to claim 6 or 7 wherein a polyisocyanate is used in which at least two of the isocyanate groups of each molecule have a clear difference in reactivity, and the first blocking agent used has a higher deblocking temperature, in the presence or absence of a catalyst, than at least the second blocking agent.

9. A process for the manufacture of a polyurethane which comprises reacting a polyol with a polyisocyanate as claimed in any one of claims 1 to 5 at a temperature equal to or above the deblocking temperature of the blocking agent having in the presence of a catalyst if such is present the lowest deblocking temperature, but below the deblocking temperature of the blocking agent(s) having a higher deblocking temperature, for a sufficient period of time to allow said deblocking to be completed or substantially completed; and then reacting the intermediate product so produced with the still partly blocked polyisocyanate at a temperature equal to or above the deblocking temperature of the blocking agent(s) having a higher deblocking temperature, for a period of time to allow the last mentioned blocking agent(s) to be deblocked after which cross-linking will begin.

10. A process according to claim 9 in which a blocked polyisocyanate is used blocked with three or more blocking agents and in said second step, the highest reaction temperature of the second step is kept below any higher deblocking temperature of a further deblocking agent used for blocking said blocked polyisocyanate, and the intermediate product is then further reacted at a higher temperature such that the further deblocking agent(s) having a higher deblocking temperature(s) are deblocked.

11. A process according to claim 9 or 10 in which the said polyol is a hydroxy-terminated polyester, a hydroxy-terminated polyether, or an acrylic resin having terminal hydroxy groups.

7